(19)

Europäisches
Patentamt
European
Patent Office
Office européen
des brevets

(11) **EP 4 773 211 A1**

(12) **EUROPEAN PATENT APPLICATION**
published in accordance with Art. 153(4) EPC

(43) Date of publication:
**08.07.2026 Bulletin 2026/28**

(21) Application number: **25869623.6**

(22) Date of filing: **20.08.2025**

(51) International Patent Classification (IPC):
*H01M 4/133 (2010.01)*    *H01M 4/134 (2010.01)*
*H01M 4/587 (2010.01)*    *H01M 4/38 (2006.01)*
*H01M 4/36 (2006.01)*    *H01M 10/44 (2006.01)*
*H01M 10/52 (2006.01)*    *H01M 10/04 (2006.01)*
*H01M 50/213 (2021.01)*    *H01M 4/02 (2006.01)*

(52) Cooperative Patent Classification (CPC):
**H01M 4/02; H01M 4/133; H01M 4/134; H01M 4/36;
H01M 4/38; H01M 4/587; H01M 10/04;
H01M 10/052; H01M 10/44; H01M 50/213;
Y02E 60/10**

(86) International application number:
**PCT/KR2025/012607**

(87) International publication number:
**WO 2026/089242 (30.04.2026 Gazette 2026/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.10.2024 KR 20240145065 U**

(71) Applicant: **LG ENERGY SOLUTION, LTD.
Seoul 07335 (KR)**

(72) Inventors:
• **LEE, Seunggwan**
  **Daejeon 34122 (KR)**
• **SHIN, Sun Young**
  **Daejeon 34122 (KR)**
• **LEE, Yong Ju**
  **Daejeon 34122 (KR)**
• **HEO, Bumgi**
  **Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE FOR LITHIUM SECONDARY BATTERY, LITHIUM SECONDARY
BATTERY, BATTERY MODULE, AND BATTERY PACK**

(57)    The present application relates to a negative electrode for a lithium secondary battery, a method for manufacturing a negative electrode for a lithium secondary battery, and a lithium secondary battery including a negative electrode.

[Figure 1]

EP 4 773 211 A1

**Description**

[Technical Field]

This application claims priority to and the benefit of Korean Patent Application No. 10-2024-0145065 filed in the Korean Intellectual Property Office on October 22, 2024, the entire contents of which are incorporated herein by reference.
The present application relates to a negative electrode for a lithium secondary battery, a lithium secondary battery, a battery module, and a battery pack.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
Recently, with the rapid spread of electronic devices using batteries, such as mobile phones, laptop computers, electric vehicles, electrically-powered tools, and cleaners, the demand for small, lightweight, and relatively high-capacity and/or high-output secondary batteries is rapidly increasing. In particular, lithium secondary batteries are attracting attention as driving power sources for electronic devices due to their light weight and high energy density. Accordingly, research and development efforts are being actively conducted to improve the performance of lithium secondary batteries.
Lithium secondary batteries produce electric energy through oxidation and reduction reactions when lithium ions are intercalated/deintercalated in positive and negative electrodes, which include active materials capable of intercalating and deintercalating lithium ions, with an organic electrolyte solution or a polymer electrolyte solution filled between the positive and negative electrodes.
As a positive electrode active material constituting the positive electrode of the lithium secondary battery, metal oxide such as $LiCoO_2$, $LiMnO_2$, $LiMn_2O_4$ or $LiNiO_2$ has been used. As a negative electrode active material constituting the negative electrode, metal lithium, a carbon based material such as graphite, or activated carbon, a material such as silicon oxide ($SiO_x$), or the like has been used. Among the negative electrode active materials described above, metal lithium was mainly used in the early days. However, as charging and discharging cycles progress, lithium atoms grow on the surface of metal lithium, damaging a separator and eventually destroying the battery. Accordingly, carbon-based materials have been mainly used in recent years.
Graphite is mainly used as the negative electrode active material in lithium secondary batteries. However, graphite has a low capacity per unit mass of 372 mAh/g, making it difficult to achieve a high capacity of lithium secondary batteries. Accordingly, in order to achieve the high capacity of lithium secondary batteries, non-carbon-based negative electrode materials with higher energy density than that of graphite, such as silicon, tin, and oxides thereof, are being developed. Although such non-carbon-based negative electrode materials have the high capacity, the initial efficiency is low. Therefore, there are problems in that lithium consumption during initial charging and discharging is high and irreversible capacity loss is large.
Accordingly, research is being conducted on methods to achieve high capacity and improve energy density by applying carbon-based active materials, or to secure energy density and capacity as well as life performance by appropriately combining silicon-based active materials and carbon-based active materials. However, a negative electrode for a lithium secondary battery that can solve the above-described problems has not yet been developed.
In particular, research is underway on silicon-carbon composites as next-generation silicon-based active materials. These materials are known to be suitable for lithium secondary batteries with high energy density due to their high capacity and efficiency. However, the silicon-carbon composites also continue to suffer from problems in life characteristics, and in aqueous processability and gas generation when used in combination with aqueous binders.
Accordingly, there is a need for the development of a negative electrode that can effectively improve the life characteristics of a battery while using a silicon-based active material and/or a carbon-based active material, and achieve rapid charging performance and high energy density.

<Citation List>

Japanese Patent Application Publication No. 2009-080971

[Detailed Description of the Invention]

[Technical Problem]

The present application relates to a negative electrode for a lithium secondary battery, which solves the problems of silicon-based active materials of the related art, such as life characteristics, and aqueous processability and gas generation associated with the use of aqueous binders. In particular, it has been found that the above problems can be resolved when a dQ/dV spectrum of a discharge profile shape of a negative electrode including a silicon-carbon composite used as a silicon-based active material falls within a specific range. Accordingly, the present application relates to a negative electrode for a lithium secondary battery, a lithium secondary battery, a battery module, and a battery pack that can secure high energy density and high capacity along with improved life characteristics.

[Technical Solution]

An exemplary embodiment of the present specification provides a negative electrode for a lithium secondary battery, including: a negative electrode current collector layer; and a negative electrode active material layer provided on one surface or both surfaces of the negative electrode current collector layer, wherein the negative electrode active material layer includes a negative electrode active material layer composition including a negative electrode active material, the negative electrode active material includes a silicon-carbon composite, the negative electrode includes a first peak within a range of 0.25 V or more and 0.35 V or less and a second peak within a range of 0.42 V or more and 0.48 V or less in a dQ/dV spectrum of a discharge profile shape, when a lithium metal is used as a counter electrode for the negative electrode for a lithium secondary battery, and after N repetitions of charging and discharging cycles, with respect to the first peak (Nth cycle) and the second peak (Nth cycle), the second peak (Nth cycle) satisfies Formula 1:

[Formula 1] [(second peak (first cycle) - second peak (second cycle)) / second peak (first cycle)] x 100% $\leq$ 10.

[Formula 1]

An exemplary embodiment of the present application provides a lithium secondary battery including a positive electrode; the negative electrode for a lithium secondary battery according to an exemplary embodiment of the present application; a separator provided between the positive electrode and the negative electrode; and an electrolyte.

An exemplary embodiment of the present application provides a battery module including the lithium secondary battery.

Finally, a battery pack including the lithium secondary battery or the battery module is provided.

[Advantageous Effects]

In the development of batteries for vehicles, high energy density and high capacity are essential for improving driving performance. In order to satisfy the above performance, it is necessary to use a silicon-carbon composite as a negative electrode active material, and in this case, problems with life performance due to volume expansion and problems with the stability of the negative electrode slurry occur.

In the case of the negative electrode for a lithium secondary battery according to the present application, the negative electrode active material includes a silicon-carbon composite, the negative electrode includes a first peak within a range of 0.25 V or more and 0.35 V or less and a second peak within a range of 0.42 V or more and 0.48 V or less in a dQ/dV spectrum of a discharge profile shape, when a lithium metal is used as a counter electrode for the negative electrode for a lithium secondary battery, and after N repetitions of charging and discharging cycles, with respect to the first peak (Nth cycle) and the second peak (Nth cycle), the second peak (Nth cycle) satisfies Formula 1.

That is, when a total volume of porous carbon, $SiH_4$ deposition conditions, and coating conditions are controlled during the manufacture of a silicon-carbon composite, the dQ/dV spectrum of the discharge profile shape of the negative electrode can be made to satisfy the range of Formula 1 as described above, and in particular, the silicon-carbon composite is characterized in that a decrease in the intensity of the second peak in the second cycle after the first cycle is small.

When a silicon-carbon composite having the above characteristics is used, high energy density and high capacity characteristics can be achieved, and volume expansion can be controlled to improve life performance. In particular, it has the characteristic of being able to control the aqueous processability and gas generation of the negative electrode slurry, thereby securing life performance.

The silicon-carbon composite satisfying Formula 1 is a result of silicon being uniformly deposited within the pores of the porous carbon while minimizing silicon deposited on the surface of the porous carbon, thereby securing life performance by relatively stable formation of an SEI during charging and discharging and reduction in electrical short-circuit phenomena of particles.

[Brief Description of Drawings]

FIG. 1 is a view showing a stack structure of a negative electrode for a lithium secondary battery according to an exemplary embodiment of the present application.

FIG. 2 is a view showing a stack structure of a lithium secondary battery according to an exemplary embodiment of the present application.

FIG. 3 is a diagram showing a dQ/dV peak according to Example 1 of the present application.

FIG. 4 is a graph appearing in the course of deriving the dQ/dV peak according to Example 1 of the present application.

FIG. 5 is a diagram showing a dQ/dV peak according to Comparative Example 1 of the present application.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

As used herein, the description "a polymer includes a certain monomer as a monomer unit" means that the monomer participates in a polymerization reaction and is included as a repeating unit in the polymer. As used herein, when it is described that a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

As used herein, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. As used herein, the molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a negative electrode for a lithium secondary battery, including: a negative electrode current collector layer; and a negative electrode active material layer provided on one surface or both surfaces of the negative electrode current collector layer, wherein the negative electrode active material layer includes a negative electrode active material layer composition including a negative electrode active material, the negative electrode active material includes a silicon-carbon composite, the negative electrode includes a first peak within a range of 0.25 V or more and 0.35 V or less and a second peak within a range of 0.42 V or more and 0.48 V or less in a dQ/dV spectrum of a discharge profile shape, when a lithium metal is used as a counter electrode for the negative electrode for a lithium secondary battery, and after N repetitions of charging and discharging cycles, with respect to the first peak (Nth cycle) and the second peak (Nth cycle), the second peak (Nth cycle) satisfies Formula 1:

[(second peak (first cycle) - second peak (second cycle)) / second peak (first cycle)] x 100% ≤ 10.          [Formula 1]

When a silicon-carbon composite having the above characteristics is used, high energy density and high capacity characteristics can be achieved, and volume expansion can be controlled to improve life performance. In particular, it has the characteristic of being able to control the aqueous processability and gas generation of the negative electrode slurry, thereby securing life performance.

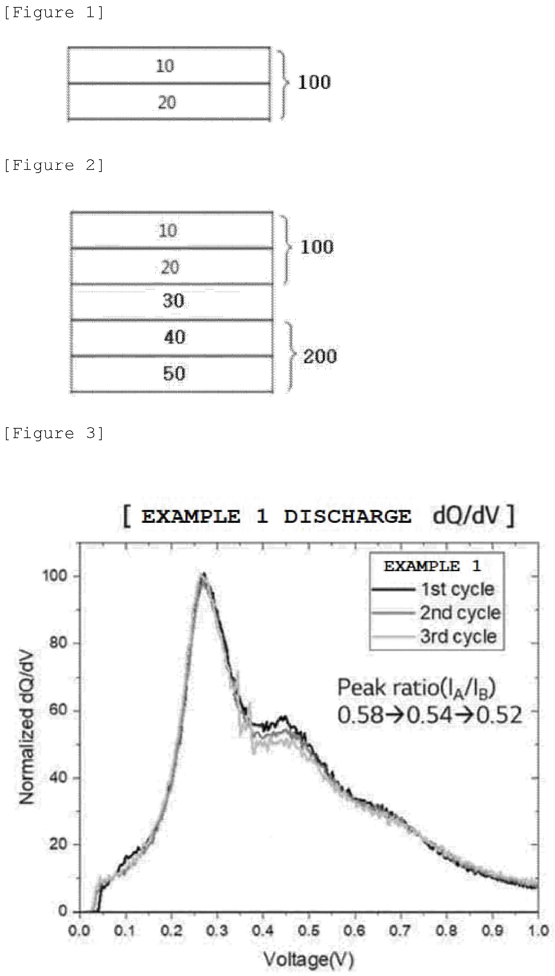

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

This will be described in more detail below.

In an exemplary embodiment of the present application, the negative electrode current collector layer generally has a thickness of 1 μm to 100 μm, specifically, 8 μm to 15 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 μm or more and 100 μm or less.

However, the thickness may be variously modified depending on a type and a use of negative electrode used, and is not limited thereto.

The negative electrode active material layer according to an exemplary embodiment of the present application includes a negative electrode active material layer composition including a negative electrode active material, and the negative electrode active material includes a silicon-carbon composite.

In an exemplary embodiment of the present application, the silicon-carbon composite may be expressed as Si/C.

In the present specification, the silicon-carbon composite is a composite of Si and C, and is distinguished from silicon carbide expressed as SiC. The silicon carbide does not react electrochemically with lithium, so all performance, including life, may be measured as 0.

The silicon-carbon composite may be a composite of silicon, graphite, and the like, and may form a structure in which a core resulting from compositing of silicon, graphite, and the like is surrounded by graphene, amorphous carbon, or the like. In the silicon-carbon composite, silicon may be nano silicon. For example, the nano silicon may be silicon within a range of 1 nm to 999 nm.

In an exemplary embodiment of the present application, there is provided the negative electrode for a lithium secondary battery in which the negative electrode active material is included in an amount of 90 parts by weight or less based on 100 parts by weight of the negative electrode active material layer composition.

In another exemplary embodiment, the negative electrode active material may be included in an amount of 90 parts by weight or less, specifically 85 parts by weight or less, and 50 parts by weight or more, preferably 70 parts by weight or more, based on 100 parts by weight of the negative electrode active material layer composition.

In an exemplary embodiment of the present application, there is provided the negative electrode for a lithium secondary battery in which the silicon-carbon composite is included in an amount of 50 parts by weight or less based on 100 parts by weight of the negative electrode active material.

In another exemplary embodiment, the silicon-carbon composite may be included in an amount of 1 part by weight or more and 50 parts by weight or less, specifically 5 parts by weight or more and 45 parts by weight or less, and more specifically 10 parts by weight or more and 35 parts by weight or less, based on 100 parts by weight of the negative electrode active material.

By including the negative electrode active material within the specific range, the capacity characteristics and energy density of the negative electrode can be secured. In other words, as the content of the silicon-carbon composite increases, the energy density can be improved, but the life characteristics deteriorate due to more severe volume expansion. Conversely, if the content of the silicon-carbon composite is low, neither high-energy density nor rapid charging performance can be secured. Therefore, when the content falls within the specific range, high-energy density can be secured while improving rapid charging performance.

Note that the average particle diameter (D50 particle size) of the silicon-carbon composite of the present invention may be 1 $\mu$m or more and 10 $\mu$m or less, specifically 2 $\mu$m to 8 $\mu$m, and more specifically 3 $\mu$m to 8 $\mu$m. When the average particle diameter falls within the specific range, a specific surface area of the particles falls within a suitable range, resulting in formation of the viscosity of the negative electrode slurry within an appropriate range. Accordingly, particles constituting the negative electrode slurry are smoothly dispersed. In addition, the size of the silicon-carbon composite has a value equal to or greater than the lower limit of the specific range, resulting in an excellent contact area between the silicon particles and the conductive material due to a composite composed of the conductive material and binder in the negative electrode slurry, which increases the likelihood of maintaining a conductive network, thereby improving the capacity retention rate. Note that, when the average particle diameter falls within the specific range, excessively large silicon particles are excluded, resulting in formation of a smooth surface of the negative electrode. Accordingly, a phenomenon of current density non-uniformity during charging and discharging can be prevented.

Additionally, in an exemplary embodiment of the present application, the silicon-carbon composite may not include particles having a particle diameter of less than 1 $\mu$m. Specifically, the silicon-carbon composite may include particles having a particle diameter of 1 $\mu$m or more and 10 $\mu$m or less, and particles having a particle diameter of less than 1 $\mu$m may be included in an amount of 1 part by weight or less, specifically 0.1 parts by weight or less, based on 100 parts by weight of the silicon-carbon composite particles. That is, the silicon-carbon composite according to an exemplary embodiment of the present application is characterized in that it does not include fine particles.

In an exemplary embodiment of the present application, the silicon-carbon composite generally has a characteristic BET specific surface area. The BET specific surface area of the silicon-based active material is preferably 0.1 to 5 $m^2$/g, more preferably 0.1 to 4.5 $m^2$/g, particularly preferably 0.2 to 4 $m^2$/g, and most preferably 0.2 to 3.5 $m^2$/g. The BET specific surface area is measured in accordance with DIN 66131 (using nitrogen).

In an exemplary embodiment of the present application, the silicon-carbon composite may be present in, for example, a crystalline or amorphous form, and is preferably not porous. The silicon particles are preferably spherical or fragmented particles. Alternatively, but less preferably, the silicon particles may also have a fiber structure or be present in the form of a silicon-containing film or coating.

In an exemplary embodiment of the present application, the silicon-carbon composite may have a non-spherical shape and its sphericity (circularity) is, for example, 0.9 or less, for example, 0.7 to 0.9, for example, 0.8 to 0.9, for example, 0.85 to 0.9.

In an exemplary embodiment of the present application, the circularity is determined by Formula 1-A below, in which A is an area and P is a total length of boundary line.

$$[Formula\ 1\text{-}A]$$

$$4\pi A/P^2$$

In an exemplary embodiment of the present application, there is provided the negative electrode for a lithium secondary battery in which the negative electrode active material further includes a carbon-based active material.

In an exemplary embodiment of the present invention, the carbon-based active material may include artificial graphite and natural graphite.

In an exemplary embodiment of the present application, there is provided the negative electrode active material in which a weight ratio of natural graphite and artificial graphite is 5:95 or more and 50:50 or less based on the carbon-based active material.

In another exemplary embodiment, the weight ratio of natural graphite and artificial graphite based on the carbon-based active material may fall within the range of 5:95 or more and 50:50 or less, preferably 7:93 to 45:55, and more preferably 10:90 to 40:60.

In an exemplary embodiment of the present application, the carbon-based active material includes graphite, and in the case of graphite, artificial graphite and natural graphite may be included. The artificial graphite has been confirmed to have superior cell characteristics compared to the natural graphite. Therefore, the use of natural graphite is reduced and the use of artificial graphite is increased. However, from a cost perspective, artificial graphite incurs high processing costs because coke needs to be calcined and graphitized. In this regard, when the specific range is satisfied, the cell characteristics are improved while addressing the cost issue.

In an exemplary embodiment of the present application, the natural graphite is characterized by satisfying the range of Formula 1.

In an exemplary embodiment of the present application, the average particle diameter (D50) of the natural graphite may be 10 μm or more and 30 μm or less, the tap density of the natural graphite may be 0.5 g/cc or more and 2.0 g/cc or less, and the specific surface area of the natural graphite may be 1 $m^2$/g or more and 5 $m^2$/g or less.

In another exemplary embodiment, the average particle diameter (D50) of the natural graphite may be 10 μm or more and 30 μm or less, specifically 12 μm or more and 27 μm or less, and more specifically 15 μm or more and 20 μm or less.

In another exemplary embodiment, the tap density of the natural graphite may be 0.5 g/cc or more and 2.0 g/cc or less, specifically 0.7 g/cc or more and 1.5 g/cc or less, and more specifically 0.9 g/cc or more and 1.2 g/cc or less.

In another exemplary embodiment, the specific surface area of the natural graphite may be 1 $m^2$/g or more and 5 $m^2$/g or less, specifically 1 $m^2$/g or more and 4 $m^2$/g or less, and more specifically 1 $m^2$/g or more and 3 $m^2$/g or less.

In an exemplary embodiment of the present application, the average particle diameter (D50) of the artificial graphite may be 10 μm or more and 25 μm or less, the tap density of the artificial graphite may be 0.5 g/cc or more and 1.5 g/cc or less, and the specific surface area of the artificial graphite may be 0.1 $m^2$/g or more and 3.0 $m^2$/g or less.

In another exemplary embodiment, the average particle diameter (D50) of the artificial graphite may be 10 μm or more and 25 μm or less, specifically 12 μm or more and 24 μm or less, and more specifically 14 μm or more and 23 μm or less.

In another exemplary embodiment, the tap density of the artificial graphite may be 0.5 g/cc or more and 1.5 g/cc or less, specifically 0.7 g/cc or more and 1.3 g/cc or less, and more specifically 0.9 g/cc or more and 1.1 g/cc or less.

In another exemplary embodiment, the specific surface area of the artificial graphite may be 0.1 $m^2$/g or more and 3.0 $m^2$/g or less, specifically 0.2 $m^2$/g or more and 2.5 $m^2$/g or less, and more specifically 0.2 $m^2$/g or more and 2.5 $m^2$/g or less.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, there is provided the negative electrode for a lithium secondary battery in which the negative electrode active material layer composition further includes a negative electrode conductive material, and a negative electrode binder.

In an exemplary embodiment of the present application, the negative electrode conductive material used may be a material that can be generally used in the art without limitation, and specifically may include one or more selected from the group consisting of a point-like conductive material, a planar conductive material, and a linear conductive material.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 4 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or more and 1.5 $\mu$m or less, a D50 of 2.5 $\mu$m or more and 3.5 $\mu$m or less, and a D90 of 7.0 $\mu$m or more and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to an exemplary embodiment of the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2/g$ or more.

In another exemplary embodiment, the planar conductive material may have a BET specific surface area of 5 $m^2/g$ or more and 500 $m^2/g$ or less, preferably 5 $m^2/g$ or more and 300 $m^2/g$ or less, and more preferably 5 $m^2/g$ or more and 250 $m^2/g$ or less.

In another exemplary embodiment, the planar conductive material is a planar conductive material with a high specific surface area, and the BET specific surface area may fall within a range of 50 $m^2/g$ or more and 500 $m^2/g$ or less, preferably 80 $m^2/g$ or more and 300 $m^2/g$ or less, and more preferably 100 $m^2/g$ or more and 300 $m^2/g$ or less.

In another exemplary embodiment, the planar conductive material is a planar conductive material with a low specific surface area, and the BET specific surface area may fall within a range of 5 $m^2/g$ or more and 40 $m^2/g$ or less, preferably 5 $m^2/g$ or more and 30 $m^2/g$ or less, and more preferably 5 $m^2/g$ or more and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In particular, the linear conductive material according to an exemplary embodiment of the present application may be a single-walled carbon nanotube (SWCNT).

The single-walled carbon nanotube is a material in which carbon atoms arranged in a hexagonal shape form a tube shape, exhibits non-conductor, conductor, or semiconductor properties depending on the unique chirality thereof, and has a tensile strength about 100 times or higher than that of steel, excellent flexibility and elasticity, and the like, as well as chemically stable properties because carbon atoms are linked by strong covalent bonds.

The single-walled carbon nanotubes have an average diameter of 0.5 nm to 15 nm. According to an exemplary embodiment of the present invention, the single-walled carbon nanotubes may have an average diameter of 1 to 10 nm, or 1 nm to 5 nm, or 1 nm to 2 nm. When the average diameter of the single-walled carbon nanotube falls within the specific range, the electrical conductivity of the negative electrode can be maintained even with a very small content of single-walled carbon nanotubes, and a desirable viscosity and solid content can be obtained during preparation of a conductive material dispersion solution. In the conductive material dispersion solution, single-walled carbon nanotubes are agglomerated with each other and therefore may be present in an entangled state (agglomerate). Therefore, after the diameter of any entangled single-walled carbon nanotube agglomerates extracted from the conductive material dispersion solution is confirmed by SEM or TEM, the average diameter may be derived by dividing the diameter of the aggregates by the number of single-walled carbon nanotubes constituting the aggregate.

The BET specific surface area of the above single-walled carbon nanotube may be 500 $m^2/g$ to 1,500 $m^2/g$, or 900 $m^2/g$ to 1,200 $m^2/g$, specifically 250 $m^2/g$ to 330 $m^2/g$. When the above range is satisfied, a conductive material dispersion solution having a preferred solid content is derived, and the viscosity of the negative electrode slurry is prevented from excessively increasing. The BET specific surface area may be measured by a nitrogen adsorption BET method.

An aspect ratio of the single-walled carbon nanotube may be 50 to 20,000, or a length of the single-walled carbon nanotube may be 5 to 100 μm, or 5 to 50 μm. When the aspect ratio or length falls within such a range, the specific surface area is at a high level, so the single-walled carbon nanotubes in the negative electrode may be adsorbed to the active material particles by a strong attractive force. Accordingly, the conductive network can be smoothly maintained even during the volume expansion of the negative electrode active material. The aspect ratio may be confirmed by obtaining an average of aspect ratios of 15 single-walled carbon nanotubes with a large aspect ratio and 15 single-walled carbon nanotubes with a small aspect ratio when the single-walled carbon nanotube powder is observed through a SEM.

Since the single-walled carbon nanotubes have a larger aspect ratio than those of multi-walled carbon nanotubes and double-walled carbon nanotubes, the single-walled carbon nanotubes have a long length and a large volume, and thus are advantageous in that an electrical network can be constructed even though only a small amount is used.

In an exemplary embodiment of the present application, the negative electrode conductive material may be included in an amount of 1 part by weight or more and 30 parts by weight or less, on the basis of 100 parts by weight of the negative electrode active material layer composition.

In another exemplary embodiment, the negative electrode conductive material may be included in an amount of 1 part by weight or more and 30 parts by weight or less, preferably 5 parts by weight or more and 25 parts by weight or less, and more preferably 10 parts by weight or more and 15 parts by weight or less, on the basis of 100 parts by weight of the negative electrode active material layer composition.

In an exemplary embodiment of the present application, the negative electrode conductive material may include a point-like conductive material, a planar conductive material, and a linear conductive material, and the point-like conductive material, the planar conductive material, and the linear conductive material may satisfy a ratio of 1:1:0.01 to 1:1:1.

In an exemplary embodiment of the present application, the point-like conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the planar conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the linear conductive material may be included in an amount of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the negative electrode conductive material.

In an exemplary embodiment of the present application, the negative electrode conductive material may include a linear conductive material and a planar conductive material.

In an exemplary embodiment of the present application, the negative electrode conductive material may include a linear conductive material and a planar conductive material, and a ratio of the linear conductive material to the planar conductive material may fall within a range of 0.01:1 to 0.1:1.

In the exemplary embodiment of the present application, as the negative electrode conductive material particularly includes the linear conductive material and the planar conductive material and the composition and ratio described above are satisfied, respectively, the life characteristics of an existing lithium secondary battery are not significantly affected, and the number of points where charging and discharging are possible increases, so that output characteristics are excellent at a high C-rate.

In an exemplary embodiment of the present application, the negative electrode conductive material may be composed of a linear conductive material.

In this case, the linear conductive material may be included in an amount of 0.01 to 2 parts by weight, 0.02 to 0.7 parts by weight, or 0.02 to 0.3 parts by weight based on 100 parts by weight of the negative electrode active material layer composition. When the content of the linear conductive material falls within the specific range, an electrical network can be sufficiently constructed in the negative electrode active material layer, and it is advantageous in terms of mixing and coating processability in electrode manufacture.

The negative electrode conductive material according to an exemplary embodiment of the present application has a completely different configuration from a positive electrode conductive material that is applied to the positive electrode. That is, the negative electrode conductive material according to an exemplary embodiment of the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

According to an exemplary embodiment of the present application, the negative electrode binder serves to support the active material and conductive material in order to prevent distortion and structural deformation of the negative electrode structure during the volume expansion and relaxation of the negative electrode active material. When the above-mentioned role is satisfied, all general binders may be applied, specifically, an aqueous binder may be used, and more specifically, a polyacrylamide (PAM)-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, or 10 parts by weight or more, based on 100 parts by weight of the negative electrode active material layer composition.

In an exemplary embodiment of the present application, there is provided a negative electrode slurry including the negative electrode active material layer composition and a negative electrode slurry solvent.

In an exemplary embodiment of the present application, the solid content of the negative electrode slurry may fall within a range of 10% to 40%.

For the slurry solvent, a solvent that is used in the art may be used without limitation, and specifically, water may be used.

In an exemplary embodiment of the present application, the negative electrode slurry may be coated on one surface or both surfaces of the negative electrode current collector layer to form a negative electrode active material layer. In this case, any coating method known in the art may be used without limitation.

In an exemplary embodiment of the present application, there is provided the negative electrode for a lithium secondary battery in which the negative electrode includes a first peak within a range of 0.25 V or more and 0.35 V or less and a second peak within a range of 0.42 V or more and 0.48 V or less in a dQ/dV spectrum of a discharge profile shape, when a lithium metal is used as a counter electrode for the negative electrode for a lithium secondary battery, and after N repetitions of charging and discharging cycles, with respect to the first peak (Nth cycle) and the second peak (Nth cycle), the second peak (Nth cycle) satisfies Formula 1 described above.

In an exemplary embodiment of the present application, Formula 1 may satisfy [(second peak (first cycle) - second peak (second cycle))/second peak (first cycle)] x 100% ≤ 10, specifically [(second peak (first cycle) - second peak (second cycle))/second peak (first cycle)] x 100% ≤ 9, or [(second peak (first cycle) - second peak (second cycle))/second peak (first cycle)] x 100% ≤ 7, and 0.1 ≤ [(second peak (first cycle) - second peak (second cycle))/second peak (first cycle)] x 100%, specifically 1 ≤ [(second peak (first cycle) - second peak (second cycle))/second peak (first cycle)] x 100%, and more specifically 3 ≤ [(second peak (first cycle) - second peak (second cycle))/second peak (first cycle)] x 100%, and the upper and lower limits may be used in combination without limitation.

In an exemplary embodiment of the present application, the first peak and the second peak correspond to peaks that appear in a discharge process after formation of an $Li_xSi_y$ phase resulting from insertion of lithium into silicon of the silicon-carbon composite. In general, in a silicon-carbon composite, the first peak is a peak that necessarily appears as a material characteristic, and the second peak corresponds to a peak that is generated in a discharge process as a result of formation of $Li_{15}Si_4$ by deeper charging during the charging process.

However, the present application is characterized in that the intensities of the first peak and the second peak are adjusted.

That is, when manufacturing a silicon-carbon composite, by controlling the total volume of porous carbon, the $SiH_4$ deposition conditions, and the coating conditions, the dQ/dV spectrum of the discharge profile shape of the negative electrode can be adjusted to fall within the range of Formula 1 as described above. The present application is characterized in that the decrease in the second peak in the second cycle relative to the first cycle is small, and deviation from the range of Formula 1 indicates that Si is relatively largely deposited on the surface rather than inside pores of the porous carbon. When Si is largely deposited on the surface, it is difficult to effectively suppress expansion during charging and discharging, and accordingly, side reactions may be caused, thereby reducing life performance. That is, the present application is characterized in that the silicon-carbon composite falls within the range of Formula 1 described above and has an effect of improving life performance.

In an exemplary embodiment of the present application, the first peak and the second peak may be derived by evaluation using a coin half cell in which lithium metal is used as a counter electrode for the negative electrode for a lithium secondary battery according to an exemplary embodiment of the present application. Specifically, profile data having capacity (mAh) on the x-axis and voltage (V) on the y-axis is obtained when charging and discharging are performed at a 0.1 C C-rate, charging is performed in a CC/CV mode with CV 5 mV and 0.0005 C, and discharging is performed in a CC mode down to 1.5 V. Thereafter, only data within the range of 0 to 1.0 V of the discharge profile is selected, and the dQ/dV differential value may be obtained by the following method using the ORIGIN program.

1. Raw data of about 5,000 to 6,000 data rows is extracted on average according to recording conditions.
2. Using the Interpolate function, X-axis and Y-axis data for 500 rows are selectively extracted from discharge raw data in the Y-axis range of 0 to 1.0 V.
3. With voltage on the X-axis and capacity (mAh) on the Y-axis, first differentiation is performed on the extracted data to obtain dQ/dV values.
4. The data is normalized so that the first peak within the range of 0.25 to 0.35 V becomes 100%, and the data is organized.

In an exemplary embodiment of the present application, there is provided the negative electrode for a lithium secondary battery in which a peak intensity ratio of the second peak (first cycle)/first peak (first cycle) is 0.5 or more and 0.8 or less.

In another exemplary embodiment, the peak intensity ratio of the second peak (first cycle)/first peak (first cycle) may be 0.5 or more and 0.8 or less, specifically 0.55 or more and 0.75 or less, and more specifically 0.55 or more and 0.7 or less.

In an exemplary embodiment of the present application, there is provided the negative electrode for a lithium secondary battery in which a peak intensity ratio of the second peak (second cycle)/first peak (second cycle) is 0.55 or more and 0.70 or less.

In an exemplary embodiment of the present application, there is provided the negative electrode for a lithium secondary battery in which, when the peak intensity ratio of the second peak (first cycle)/first peak (first cycle) is defined as a peak intensity ratio (first cycle), and the peak intensity ratio of the second peak (second cycle)/first peak (second cycle) is defined as a peak intensity ratio (second cycle), following Formula 2 is satisfied.

$$10 \leq [\text{peak intensity ratio (second cycle) / (peak intensity ratio (first cycle) - peak intensity ratio (second cycle))}] \times 100\%$$    [Formula 2]

In another exemplary embodiment, Formula 2 may satisfy $10 \leq$ [peak intensity ratio (second cycle)/(peak intensity ratio (first cycle) - peak intensity ratio (second cycle))] x 100%, specifically $11 \leq$ [peak intensity ratio (second cycle)/(peak intensity ratio (first cycle) - peak intensity ratio (second cycle))] x 100%, or $12 \leq$ [peak intensity ratio (second cycle)/(peak intensity ratio (first cycle) - peak intensity ratio (second cycle))] x 100%, and [peak intensity ratio (second cycle)/(peak intensity ratio (first cycle) - peak intensity ratio (second cycle))] x 100% $\leq$ 80, specifically [peak intensity ratio (second cycle)/(peak intensity ratio (first cycle) - peak intensity ratio (second cycle))] x 100% $\leq$ 70, and more specifically [peak intensity ratio (second cycle) / (peak intensity ratio (first cycle) - peak intensity ratio (second cycle))] x 100% $\leq$ 60, and the upper and lower limits may be used in combination without limitation.

That is, the negative electrode including a silicon-carbon composite according to an exemplary embodiment of the present application is characterized in that the rate of change of the ratio of the second peak in two or more cycles relative to the ratio of the second peak in the first cycle is low. In other words, when the specific range is satisfied, the lithium secondary battery can achieve high capacity and high energy density while securing life performance. In the present application, the specific range is satisfied by changing the particle size and the $SiH_4$ deposition and coating conditions in the manufacturing process of the silicon-carbon composite. Specifically, when fine particles of porous carbon (less than 1 $\mu$m) are removed, the total volume of the porous carbon is adjusted to 0.6 cm$^3$/g to 0.9 cm$^3$/g, and the deposition conditions are controlled by depositing silicon in an amount of 45% to 51%, silicon is uniformly deposited inside pores of the porous carbon, and the intensity of the second peak can be controlled, thereby controlling the ranges of Formulae 1 and 2 described above.

In an exemplary embodiment of the present application, there is provided a lithium secondary battery in which a rolling density of the negative electrode active material layer is 0.9 g/cc or more and 1.3 g/cc or less.

An exemplary embodiment of the present application provides a lithium secondary battery including a positive electrode; the negative electrode for a lithium secondary battery according to an exemplary embodiment of the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

**EP 4 773 211 A1**

In an exemplary embodiment of the present application, the lithium secondary battery may be a cylindrical battery.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, calcined carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide represented by chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate, and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Best Mode]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Example 1>**

**<Preparation of Silicon-Carbon Composite>**

Biomass-based raw materials such as cellulose powder and coconut shells were placed in a tubular furnace, and under non-heating conditions, the atmosphere inside the furnace was replaced with an inert gas by introducing Ar at a flow rate of 50 to 200 ml/min for 2 hours. Subsequently, the temperature was increased to 400°C at a rate of 5°C/min, followed by heating for 2 hours under an argon atmosphere. Thereafter, a carbonization process was performed by raising the temperature of the tubular furnace to 900°C at a rate of 5°C/min, followed by heating for 2 hours under an argon atmosphere, and the powder obtained after the reaction was washed two to three times with ethanol. Carbon-based particles dried at 100°C for 12 hours or longer were heated at 700°C for 3 hours in an argon atmosphere containing 10 to 20% $CO_2$ as a balance gas to expand the pores. Thereafter, the particles were washed with distilled water and dried at 100°C for 12 hours or longer. After obtaining porous carbon having a specific surface area of about 1,800 $m^2$/g through an activation process, fine particles less than 1 $\mu$m were removed by classification.

The porous carbon after classification was placed in the hot zone of a CVD apparatus as carbon-based particles, and $SiH_4/H_2$ (= 5/95) gas was flowed at a flow rate of 50 to 210 ml/min at 600°C for 3 hours under a low-pressure environment of about 1 to 10 Torr, resulting in preparation of a silicon-carbon composite.

Thereafter, without removing the silicon-carbon composite from the furnace, only Ar gas was flowed while changing the furnace temperature to 650°C at a rate of 5°C/min. For 1 hr, $C_2H_2/H_2/Ar$ (= 10/50/40) gas was flowed at a flow rate of 200 ml/min and reacted for 1 hour to form a carbon layer on the surface of the silicon-carbon composite.

**<Example 2>**

A silicon-carbon composite was prepared in the same manner as in Example 1, except that a resin-based raw material was used and the chemical activation process was performed.
The activation process was performed by mixing carbon-based particles dried at 100°C for 12 hours or longer with KOH at a weight ratio of 1:4, and heating the mixture at 700°C for 4 hours under an argon atmosphere to expand pores.

**<Example 3>**

A silicon-carbon composite was prepared in the same manner as in Example 2, except that the porous carbon after classification was placed in the hot zone of a CVD apparatus as carbon-based particles, and $SiH_4/H_2$ (= 5/95) gas was flowed at a flow rate of 50 to 210 ml/min at 600°C for 6 hours under a low-pressure environment of about 1 to 10 Torr, resulting in preparation of a silicon-carbon composite.

**<Example 4>**

A silicon-carbon composite was prepared in the same manner as in Example 1, except that there was no process of removing fine particles less than 1 $\mu$m after preparation of porous carbon, flowing $SiH_4/H_2$ (= 5/95) gas to carbon-based particles at a flow rate of 50 to 210 ml/min at 600°C for 6 hours, and there was no process of forming a carbon coating layer on the surface after preparation of the silicon-carbon composite.

**<Example 5>**

A silicon-carbon composite was prepared in the same manner as in Example 2, except that a spheroidization step was included in the process of preparing the silicon-carbon composite. As the spheroidization method, one of spray drying, rotary atomizer, and sol-gel was selected.

**<Example 6>**

A silicon-carbon composite was prepared in the same manner as in Example 2, except that the ratio of carbon-based particles and KOH was 1:3 in the activation process of porous carbon in Example 2, the fine particles were not removed in the classification, and the silicon-carbon composite was prepared under $SiH_4/H_2$ deposition conditions of $SiH_4/H_2$= 10/90 and a flow rate of 300 ml/min at 650°C.

**<Comparative Example 1>**

A silicon-carbon composite was prepared in the same manner as in Example 1, except that the porous carbon after classification was placed in the hot zone of a CVD apparatus as carbon-based particles, and $SiH_4/H_2$ (= 5/95) gas was flowed at a flow rate of 50 to 210 ml/min at 600°C for 2 hours under a low-pressure environment of about 1 to 10 Torr, resulting in preparation of a silicon-carbon composite.

**<Comparative Example 2>**

A silicon-carbon composite was prepared in the same manner as in Example 1, except that the furnace temperature was increased to 580°C while flowing only Ar gas after preparation of the silicon-carbon composite, $C_2H_2/H_2/Ar$ (=10/50/40) gas was flowed at a flow rate of 220 ml/min and reacted for 3 hours to form a carbon layer on the surface of the silicon-carbon composite.

**<Comparative Example 3>**

A silicon-carbon composite was prepared in the same manner as in Example 1, except that the furnace temperature was increased to 750°C while flowing only Ar gas after preparation of the silicon-carbon composite, $C_2H_2/H_2/Ar$ (=10/50/40) gas was flowed at a flow rate of 220 ml/min and reacted for 3 hours to form a carbon layer on the surface of the silicon-carbon composite.

**Preparation of Coin half Cell**

In order to obtain the values shown in Table 1 below, an electrode was prepared and evaluated by the following method.

A negative electrode active material layer composition was prepared using the above-prepared silicon-carbon composite (average particle diameter (D50): 5 μm) as a silicon-based active material, a first conductive material, a second conductive material, and polyacrylamide as a binder in a weight ratio of 80:9.6:0.4:10. A negative electrode slurry was prepared by adding distilled water as a solvent for formation of a negative electrode slurry (solid concentration 28 wt%).

The first conductive material was plate-like graphite (specific surface area: 17 m$^2$/g, average particle diameter (D50): 3.5 μm), and the second conductive material was carbon nanotubes.

As a mixing method, the first conductive material, the second conductive material, the binder, and water were dispersed at 2500 rpm for 30 minutes by using a homomixer, the silicon-based active material was added to the dispersion, and the resultant mixture was dispersed at 2500 rpm for 30 minutes to prepare a negative electrode slurry.

The negative electrode slurry was coated on both surfaces of a copper current collector (thickness: 15 μm) serving as a negative electrode current collector with a loading amount of 3.00 mg/ cm $^2$, which was then roll-pressed and dried in a vacuum oven at 130°C for 10 hours to form a negative electrode active material layer (thickness: 23 μm).

A coin half cell was prepared using lithium metal as a counter electrode for the negative electrode for a lithium secondary battery, and charging and discharging were performed at a 0.1 C C-rate, charging was performed in a CC/CV mode with CV 5 mV and 0.005 C, and discharging was performed in a CC mode down to 1.5 V, and profile data having capacity (mAh) on the x-axis and voltage (V) on the y-axis was extracted. Thereafter, only data within the range of 0 to 1.0 V of the discharge profile was selected, and the dQ/dV differential value was obtained by the following method using the ORIGIN program.

1. Raw data of about 5,000 to 6,000 data rows is extracted on average according to recording conditions.
2. Using the Interpolate function, X-axis and Y-axis data for 500 rows are selectively extracted from discharge raw data in the Y-axis range of 0 to 1.0 V.
3. With voltage on the X-axis and capacity (mAh) on the Y-axis, first differentiation is performed on the extracted data to obtain dQ/dV values.
4. The data is normalized so that the first peak within the range of 0.25 to 0.35 V becomes 100%, and the data is organized.

The results derived according to the above method are shown in Table 1 below.

[Table 1]

|  | Formula 1 | Formula 2 | Peak intensity ratio of second peak (first cycle)/first peak (first cycle) | Peak intensity ratio of second peak (second cycle)/first peak (second cycle) |
|---|---|---|---|---|
| Example 1 | 6.9 | 13.5 | 0.58 | 0.54 |
| Example 2 | 1.98 | 49.6 | 0.60 | 0.58 |
| Example 3 | 3.57 | 27 | 0.56 | 0.54 |
| Example 4 | 3.57 | 27 | 0.64 | 0.59 |
| Example 5 | 1.75 | 56 | 0.57 | 0.56 |
| Example 6 | 8.62 | 10.6 | 0.58 | 0.53 |
| Comparative Example 1 | 37.3 | 1.7 | 0.67 | 0.42 |
| Comparative Example 2 | 11 | 8.3 | 0.65 | 0.58 |
| Comparative Example 3 | 13 | 6.7 | 1.08 | 0.94 |

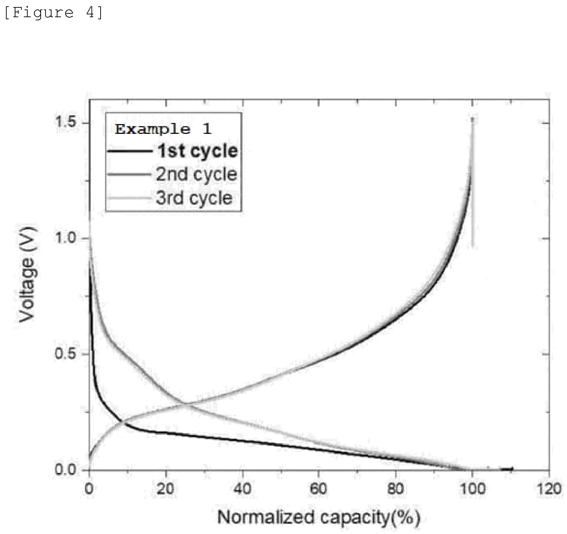

FIG. 3 is a diagram showing a dQ/dV peak according to Example 1 of the present application. For reference, FIG. 4 is a graph appearing in the course of deriving the dQ/dV peak according to Example 1 of the present application. Specifically, FIG. 4 shows profile data having capacity (mAh) on the x-axis and voltage (V) on the y-axis, which was obtained for the coin half cell of Example 1 when charging and discharging were performed at a 0.1 C C-rate, charging was performed in a CC/CV mode with CV 5 mV and 0.005 C, and discharging was performed in a CC mode down to 1.5 V, and FIG. 3 shows data obtained by normalizing the data such that the first peak within the range of 0.25 to 0.35 V in the graph becomes 100% and organizing the data.

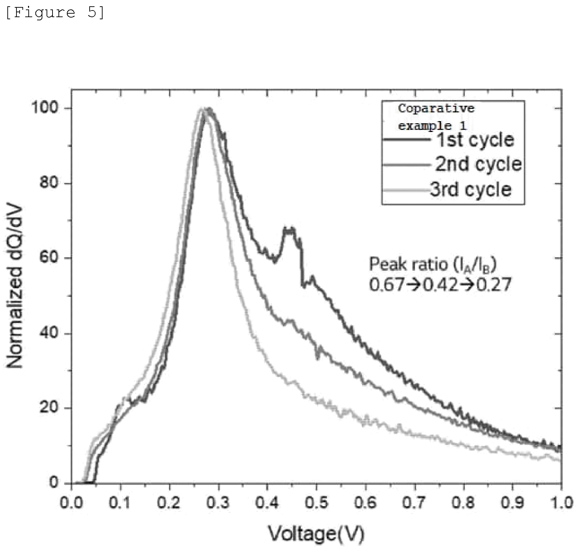

For reference, FIG. 5 is a diagram showing a dQ/dV peak according to Comparative Example 1 of the present application.

## Experimental Example 1: Battery Performance Evaluation

A negative electrode slurry was prepared by mixing a negative electrode active material including the prepared silicon-carbon composite and graphite; a conductive material including carbon black and SWCNTs; and a binder including carboxymethyl cellulose (CMC) and styrene butadiene rubber (SBR) in a weight ratio of 95.3:1:3.6 and adding a proper amount of distilled water so that the total solid content was about 46 wt%.

In this case, the ratio of the silicon-carbon composite and graphite in the negative electrode active material may be a weight ratio of 8 to 12:88 to 92.

The negative electrode slurry was applied to a Cu metal thin film with a thickness of about 20 μm, which was then dried at a circulating air temperature of 60°C. Then, the thin film was roll-pressed, dried in a vacuum oven of 130°C for about a day, and punched into a circular shape of 1.4875 cm$^2$ to prepare a negative electrode.

The batteries prepared above were charged and discharged to evaluate the discharge capacity, initial efficiency, and capacity retention rate, and the results thereof are listed in Table 2 below.

In the first and second cycles, the charging and discharging were performed at 0.1 C, and from the 3rd to the 300th cycles, the charging and discharging were performed at 0.5 C. In the 300th cycle, the charging and discharging were terminated in a charge state (a state in which lithium ions were put in the negative electrode).

Charging conditions: CC (constant current)/CV (constant voltage) (5 mV/0.005 C current cut-off)

Discharging conditions: CC (constant current) condition 1.5 V

The discharge capacity (mAh/g) and the initial efficiency (%) were derived from the result after charging and discharging once. Specifically, the initial efficiency (%) was derived by the following calculation.

Initial efficiency (%) = (discharge capacity in first cycle/charge capacity in first cycle) x 100

The capacity retention rate was derived by the following calculation.

Capacity retention rate (%) = (discharge capacity in 299th cycle/discharge capacity in first cycle) $\times$ 100

[Table 2]

|  | Discharge capacity (mAh/g) | Initial efficiency (%) | Life Characteristics (%) |
|---|---|---|---|
| Example 1 | 495 | 91.2 | 90 |
| Example 2 | 496 | 91.3 | 88.9 |
| Example 3 | 495 | 91.4 | 89.5 |
| Example 4 | 500 | 90.9 | 86.5 |
| Example 5 | 496 | 89.8 | 89.8 |
| Example 6 | 514 | 89.9 | 88.2 |
| Comparative Example 1 | 509 | 89.0 | 83.5 |
| Comparative Example 2 | 500 | 90.9 | 83 |
| Comparative Example 3 | 503 | 88.65 | 80 |

As can be seen from Table 2 above, the dQ/dV spectrum of the discharge profile shape of the negative electrode of the Examples falls within the range of Formula 1. It was confirmed that, when the silicon-carbon composite with a small decrease in the intensity of the second peak in the second cycle after the first cycle is used, high energy density and high capacity characteristics can be achieved, volume expansion can be controlled to improve life performance, and particularly aqueous processability and gas generation of the negative electrode slurry can be controlled, thereby securing life performance.

The silicon-carbon composite satisfying Formula 1 is a result of silicon being uniformly deposited within the pores of the porous carbon while minimizing silicon deposited on the surface of the porous carbon, thereby securing life performance by relatively stable formation of an SEI during charging and discharging and reduction in electrical short-circuit phenomena of particles.

In the comparative examples, it was confirmed that, unlike the examples, silicon was locally deposited on the surface of the porous carbon, or the temperature and time conditions of the $C_2H_2$ coating process after $SiH_4$ deposition were not optimized, resulting in the pores on the surface or the Si layer not being fully covered. Consequently, volume expansion or deterioration in conductivity characteristics occurred during cycling, leading to inferior life characteristics as compared with the examples.

**Claims**

1. A negative electrode for a lithium secondary battery, comprising:

    a negative electrode current collector layer; and
    a negative electrode active material layer provided on one surface or both surfaces of the negative electrode current collector layer, wherein
    the negative electrode active material layer comprises a negative electrode active material layer composition comprising a negative electrode active material,
    the negative electrode active material comprises a silicon-carbon composite,
    the negative electrode comprises a first peak within a range of 0.25 V or more and 0.35 V or less and a second peak within a range of 0.42 V or more and 0.48 V or less in a dQ/dV spectrum of a discharge profile shape,
    when a lithium metal is used as a counter electrode for the negative electrode for a lithium secondary battery, and after N repetitions of charging and discharging cycles, with respect to the first peak (Nth cycle) and the second peak (Nth cycle), the second peak (Nth cycle) satisfies Formula 1:

    [(second peak (first cycle) - second peak (second cycle)) / second peak (first cycle)] x 100% $\leq$ 10. [Formula 1]

2. The negative electrode for a lithium secondary battery of claim 1, wherein a peak intensity ratio of the second peak (first cycle)/the first peak (first cycle) is 0.5 or more and 0.8 or less.

3. The negative electrode for a lithium secondary battery of claim 1, wherein

    when a peak intensity ratio of the second peak (first cycle)/the first peak (first cycle) is defined as a peak intensity ratio (first cycle), and a peak intensity ratio of the second peak (second cycle)/the first peak (second cycle) is defined as a peak intensity ratio (second cycle),
    Formula 2 is satisfied:

    10 $\leq$ [peak intensity ratio (second cycle) / (peak intensity ratio (first cycle) - peak intensity ratio (second cycle))] x 100%. [Formula 2]

4. The negative electrode for a lithium secondary battery of claim 3, wherein the peak intensity ratio of the second peak (second cycle)/the first peak (second cycle) is 0.55 or more and 0.7 or less.

5. The negative electrode for a lithium secondary battery of claim 1, wherein the negative electrode active material further comprises a carbon-based active material.

6. The negative electrode for a lithium secondary battery of claim 1, wherein the silicon-carbon composite is included in an amount of 50 parts by weight or less based on 100 parts by weight of the negative electrode active material.

7. The negative electrode for a lithium secondary battery of claim 1, wherein an average particle diameter (D50) of the silicon-carbon composite is 1 $\mu$m or more and 10 $\mu$m or less.

8. The negative electrode for a lithium secondary battery of claim 1, wherein the negative electrode active material layer composition further comprises a negative electrode conductive material, and a negative electrode binder.

9. The negative electrode for a lithium secondary battery of claim 1, wherein a rolling density of the negative electrode active material layer is 0.9 g/cc or more and 1.3 g/cc or less.

10. A lithium secondary battery comprising:

a positive electrode;
the negative electrode for a lithium secondary battery of any one of claims 1 to 9;
a separator provided between the positive electrode and the negative electrode; and
an electrolyte.

11. The lithium secondary battery of claim 10, wherein the lithium secondary battery is a cylindrical battery.

12. A battery module comprising the lithium secondary battery of claim 10.

13. A battery pack comprising the lithium secondary battery of claim 10 or the battery module of claim 11.

[Figure 1]

[Figure 2]

[Figure 3]

[Figure 4]

[Figure 5]

# EP 4 773 211 A1

## INTERNATIONAL SEARCH REPORT

International application No.

**PCT/KR2025/012607**

### A. CLASSIFICATION OF SUBJECT MATTER

**H01M 4/133**(2010.01)i; **H01M 4/134**(2010.01)i; **H01M 4/587**(2010.01)i; **H01M 4/38**(2006.01)i; **H01M 4/36**(2006.01)i; **H01M 10/44**(2006.01)i; **H01M 10/052**(2010.01)i; **H01M 10/04**(2006.01)i; **H01M 50/213**(2021.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); C01B 32/00(2017.01); C01B 32/306(2017.01); C01B 32/354(2017.01); H01G 11/06(2013.01); H01M 10/052(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬이차전지(lithium secondary battery), 음극(anode), 활물질(active material), 실리콘 카본 복합체(silicon carbon composite), 방전 프로파일(discharge profile), 리튬 금속(lithium metal), 피크 (peak)

### C. DOCUMENTS CONSIDERED TO BE RELEVANT

| Category* | Citation of document, with indication, where appropriate, of the relevant passages | Relevant to claim No. |
|---|---|---|
| A | KR 10-2024-0057348 A (LG ENERGY SOLUTION, LTD.) 02 May 2024 (2024-05-02)<br>claims 1, 18, 19; paragraphs [0013], [0032]-[0033], [0036]-[0038], [0048] | 1-13 |
| A | KR 10-2019-0122805 A (GROUP14 TECHNOLOGIES, INC.) 30 October 2019 (2019-10-30)<br>abstract; claims 1-20 | 1-13 |
| A | KR 10-2023-0169356 A (WACKER CHEMIE AG) 15 December 2023 (2023-12-15)<br>abstract; claims 1-16 | 1-13 |
| A | KR 10-2021-0089723 A (NEXEON LTD.) 16 July 2021 (2021-07-16)<br>abstract; claims 1-40 | 1-13 |
| A | KR 10-2018-0113187 A (ENERG2 TECHNOLOGIES, INC. et al.) 15 October 2018 (2018-10-15)<br>abstract; claims 1-82 | 1-13 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 December 2025** | **05 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

### INTERNATIONAL SEARCH REPORT
#### Information on patent family members

| International application No. |
| --- |
| **PCT/KR2025/012607** |

| Patent document cited in search report | | | Publication date (day/month/year) | Patent family member(s) | | | Publication date (day/month/year) |
| --- | --- | --- | --- | --- | --- | --- | --- |
| KR | 10-2024-0057348 | A | 02 May 2024 | CN | 119365999 | A | 24 January 2025 |
| | | | | EP | 4528850 | A1 | 26 March 2025 |
| | | | | JP | 2025-525341 | A | 05 August 2025 |
| | | | | KR | 10-2025-0004998 | A | 09 January 2025 |
| | | | | US | 2024-0136503 | A1 | 25 April 2024 |
| | | | | US | 2024-0234690 | A9 | 11 July 2024 |
| | | | | WO | 2024-085622 | A1 | 25 April 2024 |
| KR | 10-2019-0122805 | A | 30 October 2019 | CN | 110582823 | A | 17 December 2019 |
| | | | | CN | 116978701 | A | 31 October 2023 |
| | | | | EP | 3593369 | A1 | 15 January 2020 |
| | | | | EP | 3593369 | A4 | 03 March 2021 |
| | | | | JP | 2020-514231 | A | 21 May 2020 |
| | | | | JP | 2024-012371 | A | 30 January 2024 |
| | | | | JP | 7376360 | B2 | 08 November 2023 |
| | | | | JP | 7756692 | B2 | 20 October 2025 |
| | | | | KR | 10-2023-0128140 | A | 01 September 2023 |
| | | | | KR | 10-2025-0061765 | A | 08 May 2025 |
| | | | | KR | 10-2571014 | B1 | 25 August 2023 |
| | | | | KR | 10-2798089 | B1 | 21 April 2025 |
| | | | | US | 11611071 | B2 | 21 March 2023 |
| | | | | US | 12155066 | B2 | 26 November 2024 |
| | | | | US | 2020-0020935 | A1 | 16 January 2020 |
| | | | | US | 2023-0327087 | A1 | 12 October 2023 |
| | | | | WO | 2018-165610 | A1 | 13 September 2018 |
| KR | 10-2023-0169356 | A | 15 December 2023 | CN | 117321002 | A | 29 December 2023 |
| | | | | CN | 118234682 | A | 21 June 2024 |
| | | | | EP | 4337607 | A1 | 20 March 2024 |
| | | | | EP | 4337607 | B1 | 09 October 2024 |
| | | | | EP | 4452847 | A1 | 30 October 2024 |
| | | | | JP | 2024-530098 | A | 16 August 2024 |
| | | | | JP | 2024-546565 | A | 26 December 2024 |
| | | | | JP | 7723763 | B2 | 14 August 2025 |
| | | | | KR | 10-2024-0125024 | A | 19 August 2024 |
| | | | | US | 2024-0246828 | A1 | 25 July 2024 |
| | | | | US | 2024-0376594 | A1 | 14 November 2024 |
| | | | | WO | 2023-117047 | A1 | 29 June 2023 |
| | | | | WO | 2023-118239 | A1 | 29 June 2023 |
| KR | 10-2021-0089723 | A | 16 July 2021 | CN | 113169308 | A | 23 July 2021 |
| | | | | CN | 113169308 | B | 18 March 2025 |
| | | | | CN | 120164915 | A | 17 June 2025 |
| | | | | CN | 120164916 | A | 17 June 2025 |
| | | | | CN | 120164917 | A | 17 June 2025 |
| | | | | CN | 120164918 | A | 17 June 2025 |
| | | | | EP | 3878033 | A1 | 15 September 2021 |
| | | | | EP | 3878033 | B1 | 04 September 2024 |
| | | | | EP | 4465371 | A2 | 20 November 2024 |
| | | | | EP | 4465371 | A3 | 18 December 2024 |
| | | | | JP | 2022-506882 | A | 17 January 2022 |
| | | | | JP | 2024-147615 | A | 16 October 2024 |
| | | | | JP | 7600107 | B2 | 16 December 2024 |

Form PCT/ISA/210 (patent family annex) (July 2022)

23

## INTERNATIONAL SEARCH REPORT
### Information on patent family members

| International application No. |
|---|
| **PCT/KR2025/012607** |

| Patent document cited in search report | Publication date (day/month/year) | Patent family member(s) | | Publication date (day/month/year) |
|---|---|---|---|---|
| | | KR 10-2024-0129240 | A | 27 August 2024 |
| | | US 11011748 | B2 | 18 May 2021 |
| | | US 11695110 | B2 | 04 July 2023 |
| | | US 12176521 | B2 | 24 December 2024 |
| | | US 12224432 | B2 | 11 February 2025 |
| | | US 2020-0152973 | A1 | 14 May 2020 |
| | | US 2021-0376313 | A1 | 02 December 2021 |
| | | US 2022-0149349 | A1 | 12 May 2022 |
| | | US 2024-0154098 | A1 | 09 May 2024 |
| | | WO 2020-095067 | A1 | 14 May 2020 |
| KR 10-2018-0113187 A | 15 October 2018 | CN 108475779 | A | 31 August 2018 |
| | | CN 108475779 | B | 23 March 2021 |
| | | CN 113224274 | A | 06 August 2021 |
| | | CN 119419246 | A | 11 February 2025 |
| | | EP 3341990 | A1 | 04 July 2018 |
| | | EP 3836261 | A1 | 16 June 2021 |
| | | EP 4286355 | A2 | 06 December 2023 |
| | | EP 4286355 | A3 | 01 May 2024 |
| | | EP 4512791 | A2 | 26 February 2025 |
| | | EP 4512791 | A3 | 03 September 2025 |
| | | JP 2018-534720 | A | 22 November 2018 |
| | | JP 2022-153561 | A | 12 October 2022 |
| | | JP 2024-073597 | A | 29 May 2024 |
| | | JP 2025-066766 | A | 23 April 2025 |
| | | JP 7115976 | B2 | 09 August 2022 |
| | | JP 7458445 | B2 | 29 March 2024 |
| | | JP 7624539 | B2 | 30 January 2025 |
| | | KR 10-2023-0091915 | A | 23 June 2023 |
| | | KR 10-2023-0092015 | A | 23 June 2023 |
| | | KR 10-2024-0023451 | A | 21 February 2024 |
| | | KR 10-2025-0080911 | A | 05 June 2025 |
| | | KR 10-2528934 | B1 | 08 May 2023 |
| | | KR 10-2636894 | B1 | 19 February 2024 |
| | | KR 10-2637617 | B1 | 19 February 2024 |
| | | US 10147950 | B2 | 04 December 2018 |
| | | US 10608254 | B2 | 31 March 2020 |
| | | US 10756347 | B2 | 25 August 2020 |
| | | US 10784512 | B2 | 22 September 2020 |
| | | US 10923722 | B2 | 16 February 2021 |
| | | US 11437621 | B2 | 06 September 2022 |
| | | US 11495798 | B1 | 08 November 2022 |
| | | US 11646419 | B2 | 09 May 2023 |
| | | US 2017-0170477 | A1 | 15 June 2017 |
| | | US 2019-0280298 | A1 | 12 September 2019 |
| | | US 2020-0075954 | A1 | 05 March 2020 |
| | | US 2020-0152983 | A1 | 14 May 2020 |
| | | US 2020-0365896 | A1 | 19 November 2020 |
| | | US 2022-0231296 | A1 | 21 July 2022 |
| | | US 2022-0352517 | A1 | 03 November 2022 |
| | | US 2023-0058348 | A1 | 23 February 2023 |

Form PCT/ISA/210 (patent family annex) (July 2022)

**INTERNATIONAL SEARCH REPORT**
**Information on patent family members**

International application No.

**PCT/KR2025/012607**

| Patent document cited in search report | Publication date (day/month/year) | Patent family member(s) | Publication date (day/month/year) |
|---|---|---|---|
| | | WO   2017-040299   A1 | 09 March 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240145065
- JP 2009080971 A